# EUROPEAN PATENT SPECIFICATION

(11) **EP 1 525 577 B1**
(45) Date of publication and mention of the grant of the patent: **21.06.2006**
(21) Application number: 02760303.4
(22) Date of filing: 01.08.2002
(51) Int. Cl.: G10L 15/20, G10L 15/18

(54) **METHOD FOR AUTOMATIC SPEECH RECOGNITION**
VERFAHREN ZUR AUTOMATISCHEN SPRACHERKENNUNG
PROCEDE DE RECONNAISSANCE VOCALE AUTOMATIQUE

(43) Date of publication of application: 27.04.2005
(73) Proprietor: TELEFONAKTIEBOLAGET LM ERICSSON (publ), 164 83 Stockholm (SE)
(72) Inventor: SCHLEIFER, Ralph, 91257 Pegnitz (DE); KIESSLING, Andreas, 91080 Marloffstein (DE); HIRSCH, Hans-Günter, 52249 Eschweiler (DE)
(74) Representative: Boesen, Johnny Peder
(86) International application number: PCT/EP2002/008585
(87) International publication number: WO 2004/015686

(56) References cited:
- EP-A- 1 215 654
- EP-A- 1 215 660
- YAMADA M ET AL: "ACTIVE/NON-ACTIVE WORD CONTROL USING GARBAGE MODEL - UNKNOWN WORD RE-EVALUATION IN SPEECH CONVERSATION" ICSLP 94: INTERNATIONAL CONFERENCE ON SPOKEN LANGUAGE PROCESSING (ICSLP), vol. 2, 18 - 22 September 1994, pages 823-826, XP000855376 YOKOHAMA: ASJ, JP

## Description

The present invention relates to a method for automatic speech recognition. In particular the present invention relates to a method for recognizing a keyword from a spoken utterance.

A method for automatic speech recognition, where a single or a plurality of keywords is recognized in a spoken utterance, is often named as keyword spotting. For each keyword to be recognized, a keyword model is trained and stored. Each keyword model is trained either for speaker dependent or speaker independent speech recognition and represents for example a word or a phrase. A keyword is spotted from the spoken utterance, when the spoken utterance itself or a part thereof matches best to any of the previously created and stored keyword models.

In the recent years, such a method for speech recognition often has been used in mobile equipment, like e.g. in mobile phones. With it, the mobile equipment can be partly or fully controlled with voice commands instead of using the keyboard. The method is preferably useable in car hands-free equipment, where it is forbidden to handle the mobile phone with the keyboard. Hereby, the mobile phone is activated as soon as a keyword is determined from a spoken utterance of the user. Then, the mobile phone listens for a further spoken utterance and assesses parts thereof as the keyword to be recognized, if that part matches best to any of the stored keyword models.

Depending on the acoustic environment, where the mobile equipment is used, or depending on the users behaviour, like e.g. the pronunciation, the keywords are recognized more or less correctly. For example, the assessing could be wrong, if the part of the spoken utterance is matched to one of the stored keywords, but which is not the wanted keyword to be recognized. As a consequence, the hit rate, that is the number of correctly recognized keywords relative to the total number of spoken keywords, strongly depends on the acoustic environment and the users behaviour.

Methods for automatic speech recognition, known from prior art, often use so called garbage models in addition to the keyword models [A new approach towards Keyword Spotting, Jean-Marc Boite, EUROSPEECH Berlin, 1993, pp.1273-1276]. For this, a plurality of garbage models is created. Some garbage models represent for example non-keyword speech, like lip smacks, breaths, or filler words "aeh" or "em". Other garbage models are created to represent background noise. The garbage models are e.g. phonemes, phoneme cover classes, or complete words. By utilising these garbage models, the false alarm rate, that is the number of wrongly recognized keywords per time unit, is decreased. That is, because parts of the spoken utterance, which include non-keyword speech can be mapped directly to one of the stored garbage models. But, when applying such a method, the hit rate is decreased, because a part of the spoken utterance might matches better to one or more of the plurality of garbage models, than to the keyword model itself. For example, if during the recognition phase the acoustic environment is bad, the part of the spoken utterance might matches to a garbage model, which represents such an acoustic environment. As a result, that part is assessed as non-keyword speech, which is of course not the wanted result.

Another speech recognition system using garbage models is known from M. Yamada et al: "ACTIVE/NON-ACTIVE WORD CONTROL USING GARBAGE MODEL - Unknown Word Re-evaluation in Speech Conversation" ICSLP 94: International Conference on Spoken Language Processing (ICSLP), vol. 2, Yokohama 18 September 1994 - 22 September 1994, pages 823-826. In this system the garbage models are used to select dif ferent sets of active vocabulary, e.g. in case of an unknown word occurring in a sequence of words known from one set of active vocabulary.

It is therefore the object of the present invention to provide a method for speech recognition, which increases the hit rate and avoids the disadvantages of the known prior art.

This is solved by the method of claim 1. According to the present invention, there is provided a method for recognizing a keyword from a spoken utterance, with at least one keyword model and a plurality of garbage models, wherein a part of the spoken utterance is assessed as a keyword to be recognized, if that part matches best either to the keyword model or to a garbage sequence model, and wherein the garbage sequence model is a series of consecutive garbage models from that plurality of garbage models.

Essentially, then the method of the present invention also assessed a part of a spoken utterance as a keyword to be recognized, when that part of the spoken keyword matches best to the garbage sequence model. Then, as an advantage of the present invention, the hit rate is increased. That is, because two models, the keyword model and the garbage sequence model, are used to recognize the keyword from a spoken utterance. Here, in the context of the present invention, a part of the spoken utterance is any time interval of an incoming utterance. The length of the time interval can be the complete utterance or only a small sequence thereof.

Advantageously, the method in accordance with the present invention avoids that the hit rate is decreased, when garbage models exist, which, in series, match better to the spoken utterance than the keyword model itself. Therefore the present automatic speech recognition method is more robust than known prior art speech recognition methods.

Preferably the garbage sequence model is determined by comparing a keyword utterance, which represents the keyword to be recognized with the plurality of garbage models, and detecting the series of consecutive garbage models, which match best to the keyword. With it, the garbage sequence model is easily created, based on existing garbage models as already used for prior art speech recognition methods. Such a prior art method is e.g. based on a finite state syntax, where one or more keyword models and a plurality of garbage models are used to recognize keywords from any incoming utterance. According to the present invention, the garbage sequence model is then created with a finite state syntax, which only includes the plurality of garbage models, but not the keyword models. The incoming utterance, which is the keyword utterance and represents the keyword, is compared with the plurality of stored garbage models. Then a series of consecutive garbage models from the plurality of garbage models is determined as the garbage sequence model, which best represent the keyword. According to the present invention this garbage sequence model is then used to recognize the keyword from a spoken utterance, if a part of the spoken utterance matches either to the keyword model or to that determined garbage sequence model.

In accordance with the method of the present invention, the determined garbage sequence model is privileged against any other path through the plurality of garbage models. Especially, the determined garbage sequence model is privileged against any path, which includes the same series of consecutive garbage models. This provides, that the part of the spoken utterance is assessed as the keyword to be recognized, although a similar path through the plurality of garbage models exists. Therefore, the hit rate is increased, because then the part of the spoken utterance is preferably assessed as the keyword to be recognized.

In accordance with a first aspect of the present invention, further, a number of further garbage sequence models is determined, which also represent that keyword, and the part of the spoken utterance is assessed as the keyword to be recognized, if that part of the spoken utterance matches best to any of that number of garbage sequence models. Then a total number of garbage sequence models, and the keyword model are used to recognize the keyword. With it, the hit rate is increased, because also a slightly worse spoken utterance might matches to any of the further garbage sequence models and is therefore assessed as the keyword.

The total number of garbage sequence models is preferably determined, by calculating for each garbage sequence model a probability value and selecting those garbage sequence models as the total number of garbage sequence models, for which the probability value is above a predefined value. Such a calculation of probability values for models is common use. Therefore the predefined probability value, which is used here to classify the garbage sequence model as a model representing the keyword or not, is determined empirically.

In accordance with a second aspect of the present invention, further
- a path through the plurality of garbage models is detected, which matches best to a part of the spoken utterance,
- a likelihood is calculated for that path, if the garbage sequence model is contained in that path
- and wherein for assessing the part of the spoken utterance as the keyword to be recognized, that path through the plurality of garbage models is assumed as the garbage sequence model, when the likelihood is above a threshold.

For this, one garbage sequence model is required, which best represents the keyword. This garbage sequence model is determined and stored a-priori, before the recognition phase. If during the recognition phase, a path through the plurality of garbage models is detected, which matches best to a part of the spoken utterance then a following post-processing step is applied. In that post-processing step, a likelihood is determined, if the predefined garbage sequence model is contained in that path. If the likelihood is above a threshold, the path or a part thereof is assumed as the garbage sequence model. With that assumption the part of the spoken utterance is assessed as the keyword to be recognized. Because only one garbage sequence model has to be stored, that recognition method according to the second aspect of the present invention causes less memory consumption and can therefore advantageously be applied, when the memory size is limited, like for example in mobile phones. Advantageously, because the threshold can be adjusted at any time for the needs, the recognition method according to that second aspect has a high flexibility.

Preferably the likelihood is calculated, based on the determined garbage sequence model, the detected path through the plurality of garbage models, and a garbage model confusion matrix, and wherein the garbage model confusion matrix contains the probabilities P (i|j) that a garbage model i will be recognized supposed a garbage model j is given.

Advantageously, the at least one garbage sequence model is determined, when a keyword model is created for a new keyword to be recognized. By this, the speech recognition method according to the first and the second aspect of the present invention is flexible, because the garbage model sequences are determined as soon as a new keyword is created. This is an advantage for speaker dependent recognition methods, where the keyword models are created from one or more utterances from one speaker, which in general is the user. Then the method is applied as soon as a new keyword is created from the user.

A further aspect of the present invention relates to a computer program product, with program code means for performing the recognition method according to the present invention, when the product is executed in a computing unit.

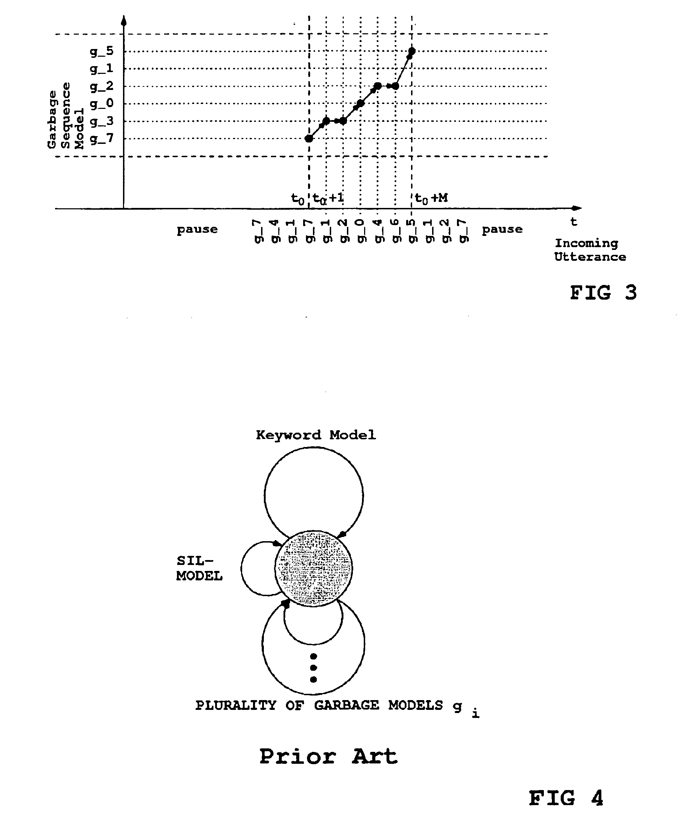

Preferably the computer program product is stored on a computer-readable recording medium. In the following the advantages of the present invention will be apparent upon reading the following detailed description of the preferred embodiments and upon the following drawings where:
Fig. 1 shows a finite state syntax for keyword spotting according to the first aspect of the present invention,
Fig.2 shows a finite state syntax for determining a garbage sequence model according to the present invention,
Fig.3 shows a mapping of a path through a plurality of garbage models to a garbage sequence model according to the second aspect of the invention,
Fig.4 shows a finite state syntax for prior art keyword spotting,
Fig 5 shows a block diagram of an automatic speech recognition device in a mobile equipment.
Automatic speech recognition is used to recognize one or more keywords from a spoken utterance. Therefore, the applied recognition method is depicted as a finite state syntax. Fig.4 shows a prior art finite state syntax for recognizing one keyword. Such a finite state syntax compares any part of an incoming utterance with models representing a keyword to be recognized. In Fig.4, a keyword model, created for the keyword to be recognized is shown as one path. Further a plurality of garbage models gᵢ, where i is an integer, is shown. For example, some garbage models represent speech events, like e.g. filled pauses "em" or lip smacks. Further garbage models represent other non-speech events, like background noise. To predefine the garbage models gᵢ it is important to have knowledge about the set of keywords, the acoustic environment in which the speech recognition is used, and the speech events to be covered by the garbage models. Additionally a further path is included in the finite state syntax, which is named SIL-Model and represents a typical period of silence. As soon as the recognition is active, each incoming utterance or any part of the incoming utterance is matched to the stored models in the finite state syntax. For it, in the finite state syntax, a path through any of the predefined keyword-, SIL- and garbage- models is determined, which matches best to the incoming utterance. Here, a path can include only one of the models, or a series of the models. The keyword is recognized if the keyword model itself is included in the path.

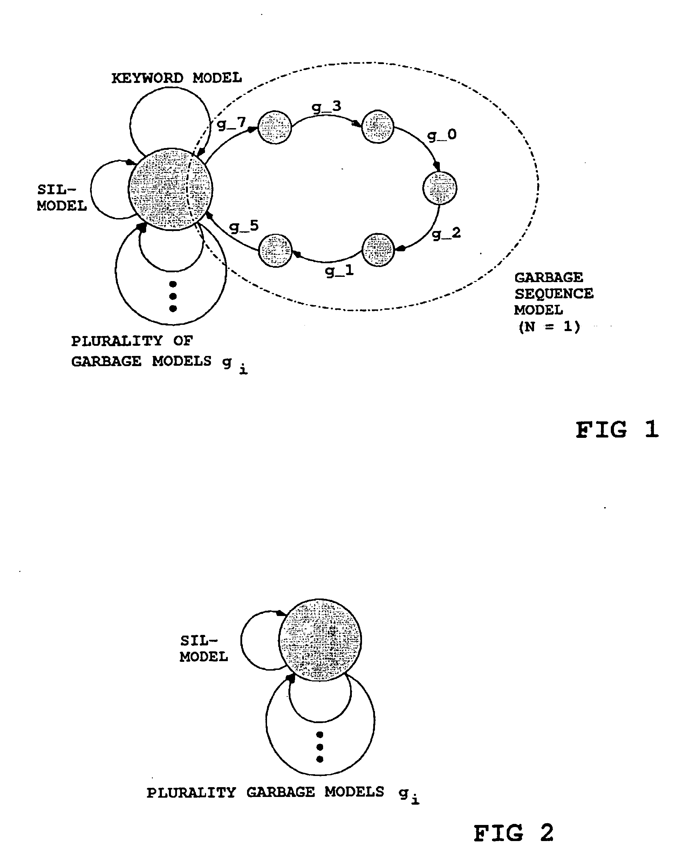

In accordance with the principle concept of the present invention, a garbage sequence model is created, which also represents the keyword. This garbage sequence model then is used to assess the incoming utterances or a part thereof as the keyword to be recognized, if the garbage sequence model matches best to the incoming utterance or to the part of the utterance. The garbage sequence model is defined in the present invention as a series of consecutive garbage models gᵢ. Such a garbage sequence model is preferably created, based on the finite state syntax as depicted in Fig.2. Here, the finite state syntax for determining the garbage sequence model includes only a SIL-model and a plurality of garbage models gᵢ. The SIL-model is optional. The garbage models gᵢ are the same as used in the finite state syntax during the normal recognition phase. For the determination of the garbage sequence model, the finite state syntax as depicted in Fig.2, is applied to a keyword utterance, which represents the keyword to be recognized. Then that path through the plurality of garbage models gᵢ is selected, which matches best to the keyword utterance. This determined path, which is a series of consecutive garbage models gᵢ, is then used during the speech recognition phase to assess any part of an utterance as the keyword to be recognized. The creation of garbage sequence models according to the present invention can be used for speaker dependent and speaker independent speech recognition. For speaker dependent speech recognition the keyword utterance, which represents the wanted keyword is speech, which is collected from one speaker. That speaker is usually the user of the mobile equipment, where the speech recognition method is implemented. For speaker independent speech recognition the keyword utterance is speech, which is collected from a sample of speakers. Alternatively, the keyword utterance is an already trained and stored reference model.

The method in accordance with the first aspect of the present invention is now described by an example, as depicted in Fig.1. Here the finite state syntax has one keyword model, one SIL-model, and a plurality of garbage models gᵢ. Further, exactly one garbage sequence model is used, which is created according to the present invention. In the present example the garbage sequence model consists of the series g₇-g₃-g₀-g₂-g₁-g₅ of consecutive garbage models, which are determined, based on the syntax as shown in Fig. 2. The finite state syntax, as shown in Fig. 1, is than applied to an incoming utterance. With it, the hit rate is increased, because a keyword is recognized, if the part of the spoken utterance either matches best to the keyword model or to the determined garbage sequence model. Even if the method according to the first aspect of the present invention is described based on the finite state syntax as depicted in Fig.1, where exactly one garbage sequence model is used, the present invention is not limited to that example. Of course, a further number N of garbage sequence models can exist for each keyword to be recognized. With these further N garbage sequence models in addition to the first determined garbage sequence model, the hit rate is further increased. The total number N is limited, based on the probability that each of the N+1 garbage sequence models represents the keyword. Therefore, for each of the determined garbage sequence models, a probability value is calculated. Then, those garbage sequence models are selected as the total number N+1 of garbage sequence models, for which the probability value is above a certain threshold. A typical threshold is assumed as a probability value, which is 90% from the maximal available probability value, wherein the maximal available probability value is the probability value for the best garbage sequence model. To limit the total number N+1 of garbage sequence models to an operable amount, the total number N+1 of used garbage sequence models should be limited to maximal 10.

Advantageously the determined garbage sequence models are privileged against any path through the plurality of garbage models. Particularly the series of consecutive garbage models, which determined the garbage sequence model, is always weighted higher than the same series of consecutive garbage models from the plurality of garbage models. Then the hit rate is increased, because as soon as a series of consecutive garbage models match best to the part of a spoken utterance, the garbage sequence model is selected and the part of the utterance is assessed as the keyword to be recognized. Even if the present invention is explained based on the finite state syntax for one keyword, the invention is also usable for more than one keyword. To privilege the garbage sequence model a penalty is defined for the garbage models from the plurality of garbage models. This then leads to a higher probability for the garbage sequence model, compared to an identical series through the plurality of garbage models.

A mapping from a path through a plurality of garbage models to the predefined garbage sequence model is depicted in Fig.3. Here, on the abscissa the determined garbage sequence model g₇-g₃-g₀-g₂-g₁-g₅, which matches best to the keyword model, is shown. A detected path through the plurality of garbage models, which matches best to the part of the incoming spoken utterance, is depicted on the t axis. The determined garbage sequence model is already predefined, which for example is done according to the finite state syntax as shown in Fig.2. But contrary to the method in accordance with the first aspect, that garbage sequence model is not used directly to assess a part of an utterance as the keyword to be recognized. Rather, for recognition purposes, a prior art finite state syntax like that one shown in Fig.4 is used. In a first step, a path through the plurality of garbage models is detected, which best matches to the spoken utterance. Then, in a post-processing step, that detected path is compared with the predefined garbage sequence model. Therefore, a likelihood is calculated, that the predefined garbage sequence model is contained in the detected path. And finally, that path is assumed as the garbage sequence model, when the likelihood is above a certain threshold. When the path is assumed as the garbage sequence model, then the part of the spoken utterance is assessed as the keyword to be recognized. Also, the method in accordance with the second aspect of the present invention increases the hit rate. Contrary to the method in accordance with the first aspect, this method is more flexible, but it needs more computation effort. Here, for each keyword model, only one garbage sequence model has to be stored and the recognition process is post-processing computation. Based on Fig.3, the post-processing computation, where a keyword is assessed is now described in more detail. A soft comparison is applied by computing the likelihood, that the garbage sequence model is contained in the detected path through the plurality of garbage models. This likelihood is calculated for example by using a dynamic programming [Dynamic Programming; Bellman,R.E.; Princeton University Press; 1972] and a garbage model confusion matrix. At each point of the grid, which is shown in Fig.3, a probability is calculated, which describes the likelihood that the determined path matches with the predetermined garbage sequence model. Therefore the probabilities P(gᵢ|gⱼ), where i#j and i,j are integer, which are known from the garbage confusion matrix are used as emission probabilities. Alternatively statistical models of higher order may be used as well. The transition probabilities for going from garbage model gᵢ at the time t to the garbage model gj at the discrete time t+1 are constant for all i,j,t and do not have to be considered in the search therefore. Also it is allowed either to remain in the same garbage model of the garbage sequence model from t to t+1, or to move to the next garbage model, or to skip a garbage model. Thus the dynamic programming search delivers the best probability, for the garbage sequence in the time interval from to to (t₀+M), if the garbage sequence model was not exactly found in the path, as shown in Fig.3. In the post-processing step all possible paths through the grid network are calculated and the path with the highest probability is then used for the assessing step. In a final step the part of the spoken utterance is assessed as the keyword to be recognized, if the dynamic programming delivers a probability higher than a predefined threshold. Again also the method according to the second aspect of the present invention is not limited to the recognition of only one keyword. For more than one keyword the method is applied to each of the plurality of keywords.

The method in accordance with the principle concept of the present invention increases the hit rate. The hit rate is further increased with the both described aspects of the present invention. The method in accordance with the first aspect of the present invention is easy to implement and needs less computation effort. The method in accordance with the second aspect of the present invention is more flexible. The hit rate can also be increased when applying a method, which combines the features of the first and the second aspect of the present invention. Then, a part of the spoken utterance is assessed as the keyword, when in accordance with the first aspect, the path directly matches best to one or more predefined garbage sequence models, or when in accordance with the second aspect, the path is assumed as the garbage sequence model. With it, the speech recognition method of the present invention is flexible and adaptable to the mobile equipment limitations, like e.g. limited memory size in that mobile equipment, where the method is implemented.

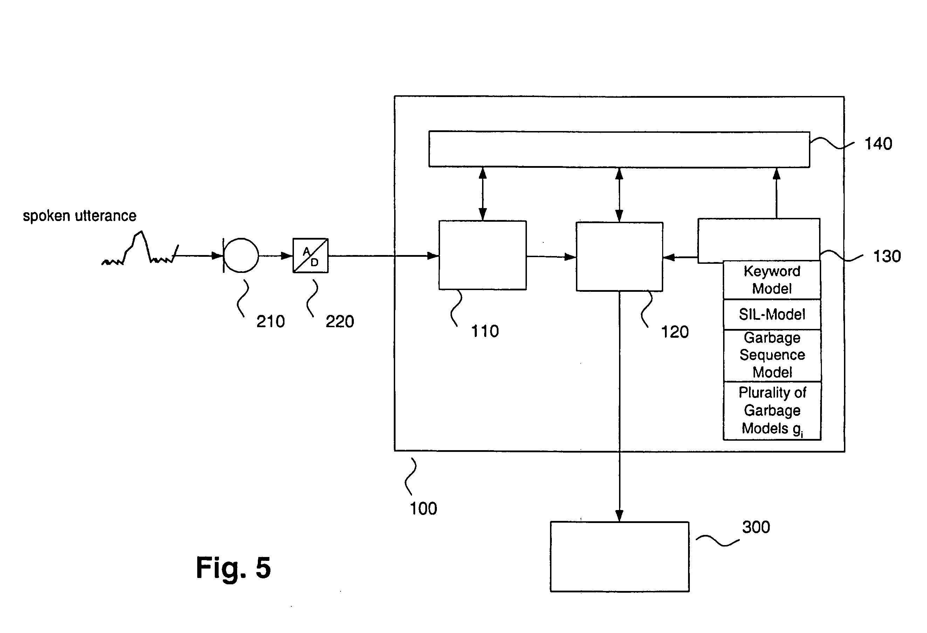

Fig 5 shows a block diagram of an automatic speech recognition device 100 in a mobile equipment, like e.g. a mobile phone. The central parts of the speech recognition device 100, which are arranged as several parts (as shown) or as one central part, are: a pattern matcher 120, a memory part 130 and a controller part 140. The pattern matcher 120 is connected with the memory part 130, where the keyword models, the garbage models, the SIL-model and the garbage sequence models can be stored. The keyword models, the SIL-models and the garbage models are created according to well known prior art techniques. The garbage sequence models are determined in accordance with the present invention, as described above. The controller part 140 is connected to the pattern matcher 120 and to the memory part 130. The controller part 140, the pattern matcher 120 and the memory part 130 are the central parts, which carry out any of the methods for automatic speech recognition of the present invention. An utterance, which is spoken from a user of the mobile equipment, is transformed from a microphone 210 in an analog signal. This analog signal is then transformed from an A/D converter 220 in a digital signal. That digital signal is then transformed from a pre-processor part 110 in parametric description. The pre-processor part 110 is connected to the controller part 140 and the pattern matcher 120. Based on a finite state syntax according to the present invention, the pattern matcher 120 compares the parametric description of the spoken utterance with the models, which are stored in the memory part 130. If the parametric description from at least a part of the spoken utterance matches to one of the stored models in the memory part 130, an indication of what is assessed as to be recognized is given to the user. That indicated recognition result is conveyed to the user by a loudspeaker 300 or on a display (not shown) of the mobile equipment.

Contrary to speech recognition devices, known from prior art, the automatic speech recognition device according to the present invention, also assesses any part of the spoken utterance as a keyword to be recognized, if that part matches best to at least one of the determined and in the memory part stored garbage sequence models. With that, the hit rate is increased.

## Claims

1. Method for recognizing a keyword from a spoken utterance, wherein
said spoken utterance is compared with at least one keyword model and a plurality of garbage models (gᵢ); and
a part of the spoken utterance is assessed as the keyword to be recognized, if that part matches best to the keyword model,
**characterized in that** a part of the spoken utterance is also assessed as the keyword to be recognized, if that part matches best to a garbage sequence model comprising a series of consecutive garbage models from the plurality of garbage models (gᵢ),
wherein the garbage sequence model is determined by comparing a keyword utterance, which represents the keyword to be recognized, with the plurality of garbage models (gᵢ);
and detecting the series of consecutive garbage models from the plurality of garbage models that match best to the keyword to be recognized.

2. The method according to claim 1, wherein
- the determined garbage sequence model is privileged against any path through the plurality of garbage models (gᵢ).

3. The method according to any of the claims 1 or 2, further
- determining a number (N) of further garbage sequence models, which also represent that keyword to be recognized, and
- assessing the part of the spoken utterance as the keyword to be recognized, if that part of the spoken utterance matches best to any of that number (N) of garbage sequence models.

4. The method according to claim 3, wherein the total number (N+1) of garbage sequence models are determined:
- by calculating for each garbage sequence model a probability value and
- selecting those garbage sequence models as the total number (N+1) of garbage sequence models, for which the probability value is above a predefined value.

5. The method according to any of the claims 1-4 further
- detecting a path through the plurality of garbage models (gᵢ) that matches best to the spoken utterance,
- calculating for that path a likelihood that the garbage sequence model is contained in that path and
- wherein for assessing a part of the spoken utterance as the keyword to be recognized, that path through the plurality of garbage models is (gᵢ) assumed as the garbage sequence model when the likelihood is above a threshold.

6. The method according to claims 5, **wherein**
- the likelihood is calculated based on the determined garbage sequence model and the detected path through the plurality of garbage models (gᵢ) and a garbage model confusion matrix, and
- wherein the garbage model confusion matrix contains the probabilities P(i|j) that a garbage model i will be recognized supposed a garbage model j is given.

7. The method according to claim 6, **wherein** the likelihood is calculated with dynamic programming techniques.

8. The method according to any of the claims 1-7, **wherein** the at least one garbage sequence model is determined, when a keyword model is created for a new keyword to be recognized.

9. The method according to any of the claims 1-8, wherein the keyword utterance is speech, which is collected from one speaker.

10. The method according to any of the claims 1-8, wherein the keyword utterance is speech, which is collected from a sample of speakers.

11. The method according to any of the claims 1-8, wherein the keyword utterance is a reference model.

12. A computer program product with program code means for performing the steps according to one of the claims 1 to 11 when the product is executed in a computing unit.

13. The computer program product with program code means according to claim 12 stored on a computer-readable recording medium.

14. An automatic speech recognition device (100), implemented
the method according to any of the claims 1-11, including
- a pre-processing part (110), where a digital signal from an utterance, spoken into a microphone (210) and transformed in an A/D converter (220) is transformable in a parametric description; .
- a memory part (130), where keyword models (gᵢ), SIL models, garbage models and garbage sequence models are storable;
- a pattern matcher (120), where the parametric description of the spoken utterance is comparable with the stored keyword models, SIL models, garbage models (gᵢ) and garbage sequence models;
- a controller part (140), where, in combination with the pattern matcher (120) and the memory part (130), the method for automatic speech recognition is executable.

15. A mobile equipment, with an automatic speech recognition device according to claim 14, wherein the mobile equipment is a mobile phone.

## Patentansprüche

1. Verfahren zum Erkennen eines Schlüsselworts von einem gesprochenen Ausspruch, wobei der gesprochene Ausspruch mit mindestens einem Schlüsselwortmodell und einer Mehrzahl von Abfallmodellen (gᵢ) verglichen wird; und
ein Teil des gesprochenen Ausspruchs als das zu erkennende Schlüsselwort beurteilt wird, falls dieser Teil am besten mit dem Schlüsselwortmodell übereinstimmt,
**dadurch gekennzeichnet, dass** ein Teil des gesprochenen Ausspruchs auch als das zu erkennende Schlüsselwort beurteilt wird, falls dieser Teil am besten mit einem Abfallsequenzmodell übereinstimmt, umfassend eine Folge von hintereinander folgenden Abfallmodellen von der Mehrzahl der Abfallmodelle (gᵢ),
wobei das Abfallsequenzmodell bestimmt wird durch Vergleichen eines Schlüsselwortausspruchs, der das zu erkennende Schlüsselwort repräsentiert, mit der Mehrzahl von Abfallmodellen (gᵢ) ; und Detektieren der Folge von hintereinander folgenden Abfallmodellen von der Mehrzahl von Abfallmodellen, die mit dem zu erkennenden Schlüsselwort am besten übereinstimmen.

2. Das Verfahren nach Anspruch 1, wobei das bestimmte Abfallsequenzmodell bevorzugt wird gegenüber einem Pfad durch die Mehrzahl von Abfallmodellen (gᵢ).

3. Das Verfahren nach einem der Ansprüche 1 oder 2, wobei
- ferner eine Anzahl (N) von weiteren Abfallmodellen bestimmt wird, die auch das zu erkennende Schlüsselwort repräsentieren, und
- Beurteilen des Teils des gesprochenen Ausspruchs als das zu erkennende Schlüsselwort, falls der Teil des gesprochenen Ausspruchs am besten mit einer dieser Anzahl (N) der Abfallsequenzmodelle übereinstimmt.

4. Das Verfahren nach Anspruch 3, wobei die Gesamtzahl (N+1) der Abfallsequenzmodelle bestimmt wird:
- durch Berechnen für jedes Abfallsequenzmodell eines Wahrscheinlichkeitswerts und
- Auswählen dieser Abfallsequenzmodelle als die Gesamtzahl (N+1) der Abfallsequenzmodelle, für der Wahrscheinlichkeitswert über einen vordefinierten Wert ist.

5. Das Verfahren nach einem der Ansprüche 1 bis 4, wobei ferner
- ein Pfad detektiert wird durch die Vielzahl von Abfallmodellen (gᵢ), die am besten mit dem gesprochenen Ausspruch übereinstimmen,
- Berechnen einer Wahrscheinlichkeit für diesen Pfad, dass das Abfallsequenzmodell in diesem Pfad enthalten ist, und
- wobei zum Beurteilen eines Teils des gesprochenen Ausspruchs als das zu erkennende Schlüsselwort, dieser Pfad durch die Mehrzahl von Abfallmodellen (gᵢ) als das Abfallsequenzmodell angesehen wird, wenn die Wahrscheinlichkeit über einen Schwellenwert ist.

6. Das Verfahren nach Anspruch 5, wobei
- die Wahrscheinlichkeit berechnet wird, basierend auf dem vorbestimmten Abfallsequenzmodell und dem detektierten Pfad durch die Mehrzahl von Abfallmodellen (gᵢ) und einer Abfallmodellkonfusionsmatrix, und
- wobei die Abfallmodellkonfusionsmatrix die Wahrscheinlichkeiten P(i|j) enthält, dass ein Abfallmodell i erkannt werden wird, vorausgesetzt ein Abfallmodell j ist gegeben.

7. Das Verfahren nach Anspruch 6, wobei die Wahrscheinlichkeit mit dynamischen Programmiertechniken berechnet wird.

8. Das Verfahren nach einem der Ansprüche 1 bis 7, wobei das mindestens eine Abfallsequenzmodell bestimmt wird, wenn ein Schlüsselwortmodell für ein neues zu erkennendes Schlüsselwort erzeugt wird.

9. Das Verfahren nach einem der Ansprüche 1 bis 8, wobei der Schlüsselwortausspruch Sprache ist, die von einem Redner gesammelt wird.

10. Das Verfahren nach einem der Ansprüche 1 bis 8, wobei der Schlüsselwortausspruch Sprache ist, die von einer Probe von Rednern gesammelt wird.

11. Das Verfahren nach einem der Ansprüche 1 bis 8, wobei der Schlüsselwortausspruch ein Referenzmodell ist.

12. Ein Computerprogrammprodukt mit einem Programmcodemittel zum Ausführen der Schritte gemäß einem der Ansprüche 1 bis 11, wenn das Produkt in einer Recheneinheit ausgeführt wird.

13. Das Computerprogrammprodukt mit einem Programmcodemittel gemäß Anspruch 12, gespeichert auf einem computerlesbaren Aufzeichnungsmedium.

14. Ein Automatische-Spracherkennungsgerät (100), das das Verfahren gemäß einem der Ansprüche 11 implementiert hat, enthaltend
- Vor-Verarbeitungsteil (110), wobei ein digitales Signals von einem Ausspruch, gesprochen in ein Mikrofon (210) und umgesetzt in einem A/D-Umsetzer (220) in eine parametrische Beschreibung transformiert wird;
- ein Speicherteil (130), wo Schlüsselwortmodelle (gᵢ), SIL-Modelle, Abfallmodelle und Abfallsequenzmodelle gespeichert werden;
- ein Musterübereinstimmer (120), wo die parametrische Beschreibung des gesprochenen Ausspruchs zu vergleichen ist mit den gespeicherten Schlüsselwortmodellen, SIL-Modellen, Abfallmodellen (gᵢ) und Abfallsequenzmodellen;
- ein Steuerungsteil (140), wo, in Kombination mit dem Musterübereinstimmer (120) und dem Speicherteil (130), das Verfahren für eine automatische Spracherkennung ausführbar ist.

15. Ein mobiles Gerät mit einem Automatische-Spracherkennungsgerät gemäß Anspruch 14, wobei das mobile Gerät ein Mobiltelefon ist.

## Revendications

1. Procédé destiné à reconnaître un mot-clef dans un énoncé parlé, dans lequel
ledit énoncé parlé est comparé à au moins un modèle de mot-clef et à une pluralité de modèles poubelles (gᵢ) ; et
une partie de l'énoncé parlé est retenue comme le mot-clef à reconnaître si cette partie correspond au mieux au modèle de mot-clef,
**caractérisé en ce qu'**une partie de l'énoncé parlé est également retenue comme le mot-clef à reconnaître si cette partie correspond au mieux à un modèle de séquence poubelle comprenant une série de modèles poubelles consécutifs dans la pluralité de modèles poubelles (gᵢ)
dans lequel le modèle de séquence poubelle est déterminé en comparant une énoncé de mot-clef, qui représente le mot-clef à reconnaître, avec la pluralité de modèles poubelles (gᵢ) ; et en détectant la série de modèles poubelles consécutifs, dans la pluralité de modèles poubelles, qui correspond au mieux au mot-clef à reconnaître.

2. Procédé selon la revendication 1, dans lequel le modèle de séquence poubelle déterminé est privilégié par rapport à un parcours quelconque dans la pluralité de modèles poubelles (gᵢ).

3. Procédé selon l'une quelconque des revendications 1 et 2, comprenant en outre les étapes consistant à :
- déterminer un nombre (N) de nouveaux modèles de séquences poubelles qui représentent également le mot-clef à reconnaître, et
- retenir la partie de l'énoncé parlé comme mot-clef à reconnaître si cette partie de l'énoncé parlé correspond au mieux à l'un quelconque de ce nombre (N) de modèles de séquences poubelles.

4. Procédé selon la revendication 3, dans lequel le nombre total (N + 1) de modèles de séquences poubelles est déterminé
- en calculant pour chaque modèle de séquence poubelle une valeur de probabilité, et
- en sélectionnant pour constituer le nombre total (N + 1) de modèles de séquences poubelles les modèles de séquences poubelles dont la valeur de probabilité est supérieure à une valeur prédéterminée.

5. Procédé selon l'une quelconque des revendications 1 à 4, comprenant en outre les étapes consistant à :
- détecter un parcours dans la pluralité de modèles poubelles (gᵢ) qui correspondent au mieux à l'énoncé parlé,
- calculer pour ce parcours une probabilité que le modèle de séquence poubelle soit inclus dans ce parcours, et
dans lequel, pour retenir une partie de l'énoncé parlé comme mot-clef à reconnaître, ce parcours dans la pluralité de modèles poubelles (gᵢ) est retenu comme modèle de séquence poubelle lorsque la probabilité est supérieure à un seuil.

6. Procédé selon la revendication 5, dans lequel la probabilité est calculée sur la base du modèle de séquence poubelle déterminé, du parcours détecté dans la pluralité de modèles poubelles (gᵢ) et d'une matrice de confusion des modèles poubelles et dans lequel la matrice de confusion des modèles poubelles contient les probabilités P(i|j) qu'un modèle de son parasite i soit reconnu, en supposant qu'un modèle de son parasite j soit donné.

7. Procédé selon la revendication 6, dans lequel la probabilité est calculée à l'aide de techniques de programmation dynamique.

8. Procédé selon l'une quelconque des revendications 1 à 7, dans lequel le au moins un modèle de séquence poubelle est déterminé lorsqu'un modèle de mot-clef est créé pour un nouveau mot-clef à reconnaître.

9. Procédé selon l'une quelconque des revendications 1 à 8, dans lequel l'énoncé de mot-clef est de la parole qui est recueillie auprès d'un locuteur.

10. Procédé selon l'une quelconque des revendications 1 à 8, dans lequel l'énoncé de mot-clef est de la parole qui est recueillie auprès d'un échantillon de locuteurs.

11. Procédé selon l'une quelconque des revendications 1 à 8, dans lequel l'énoncé de mot-clef est un modèle de référence.

12. Progiciel d'ordinateur avec un moyen de code de programme destiné à exécuter les étapes selon l'une des revendications 1 à 11 lorsque le progiciel est exécuté dans une unité de calcul.

13. Progiciel d'ordinateur avec un moyen de code de programme, selon la revendication 12, stocké sur un support d'enregistrement lisible par ordinateur.

14. Dispositif de reconnaissance automatique de la parole (100), mettant en oeuvre le procédé selon l'une quelconque des revendications 1 à 11, comprenant :
- une partie de pré-traitement (110) où un signal numérique provenant d'un énoncé parlé injecté dans un microphone (210) et transformé dans un convertisseur analogique-numérique (220) pour être transformé en une description paramétrique ;
- une partie de mémoire (130) où peuvent être stockés des modèles de mot-clefs (gᵢ), des modèles SIL, des modèles poubelles et des modèles de séquences poubelles ;
- un détecteur de motifs (120), dans lequel la description paramétrique de l'énoncé parlé peut être comparée aux modèles de mots-clefs, aux modèles SIL, aux modèles poubelles (gᵢ) et aux modèles de séquences poubelles stockés en mémoire ;
- une partie de contrôleur (140) dans laquelle, en combinaison avec le détecteur de motifs (120) et la partie de mémoire (130), le procédé de reconnaissance automatique de la parole peut être exécuté.

15. Équipement mobile, avec un dispositif de reconnaissance automatique de la parole selon la revendication 14, dans lequel l'équipement mobile est un téléphone mobile.
